Europäisches Patentamt

European Patent Office

Office européen des brevets

(11) Publication number: **0 398 754**
**A2**

# (12) EUROPEAN PATENT APPLICATION

(21) Application number: **90305435.1**

(22) Date of filing: **18.05.90**

(51) Int. Cl.5: **B29C 47/04, D06F 95/00,**
**B31B 21/00**

(30) Priority: **19.05.89 GB 8911528**

(43) Date of publication of application:
**22.11.90 Bulletin 90/47**

(84) Designated Contracting States:
**AT BE CH DE DK ES FR GB GR IT LI LU NL SE**

(71) Applicant: **Coles, Joseph Tidboald**
**22 Stadium Street**
**London SW10 OPT(GB)**

(72) Inventor: **Coles, Joseph Tidboald**
**22 Stadium Street**
**London SW10 OPT(GB)**

(74) Representative: **Allard, Susan Joyce et al**
**BOULT, WADE & TENNANT, 27 Furnival**
**Street**
**London EC4A 1PQ(GB)**

(54) **Plastic bags and method for their production.**

(57) The production of plastic bags consisting of integrally formed regions of water-insoluble plastics material and water-soluble or water-dispersible plastics material is described. The bags are made by coextruding the different plastics materials to form a tube, and then inflating and flattening the tube. Plastic bags are produced from the length of flattened tube by forming heat seals and slits or lines of perforation across its width at intervals along its length.

FIG.1

EP 0 398 754 A2

## PLASTIC BAGS AND METHOD FOR THEIR PRODUCTION

The invention relates to plastic bags and to a method for their production. In particular, it relates to plastic bags which comprise integrally formed regions of water-insoluble plastics material and water-soluble or water-dispersible plastics material.

Hospitals have to wash a great deal of soiled bed linen and clothing. In cases where the patient has been suffering from an infectious or contagious disease it is desirable that such soiled articles should have to be manhandled as little as possible. This requirement has become particularly acute with the spread of Aids. This has led to a large increase in the amount of hazardous hospital laundry particularly since Aids patients often suffer from night sweats and require frequent changes of bedding.

Some years ago water-soluble plastics materials were developed and it was proposed that such materials could be used to fabricate laundry bags. Contaminated articles could then be put into the laundry bags by hospital workers wearing protective gloves and sealed, for example by heat sealing or by tying the ends of the bag. Once inside the bag the contaminated laundry could be easily transported to the washing area without fear of contamination and placed directly into a washing machine. When the washing machine was operated the presence of water would dissolve the wall of the bag thus releasing the soiled articles and permitting them to be washed and/or sterilised.

Unfortunately, water-soluble plastics material is expensive and it is thus desirable to develop laundry bags which can be used in the manner described but which are less expensive.

GB 2073702B and GB 2155902B propose bags for contaminated laundry formed of a hydrophobic or water-insoluble sheet material. A slit is provided in one face of the bag and adjacent edges of the slit are joined by an overlying strip of water-soluble or water-dispersible material secured to the sheet material by adhesive. On washing, the water-soluble or water-dispersible material disintegrates leaving an aperture in the bag through which its contents can empty into the washing machine.

There are two main disadvantages with such a system. First, several additional process steps are necessary in the formation of such a bag and this adds to the cost. Thus, after bags have been extruded according to conventional processes they must be slit, glued and have the strip of water-soluble material affixed to them. Secondly, as only one slit is provided a bag which is heat sealed at both ends will have four enclosed corners in which washing may become trapped. Where this occurs the washing process may prove ineffective.

The present invention provides a process for making laundry bags partly comprised of water-soluble or water-dispersible plastics material which reduces or obviates the above-mentioned process disadvantages. The present invention also includes plastic bags which perform the required function but which are of simpler construction than those described in the mentioned prior art. In a preferred embodiment, the plastic bags of the present invention avoid the problem of laundry being trapped within a bag.

Conventionally, plastic bags are made by extruding a tube of plastics material, inflating the tube to increase its diameter and reduce its wall thickness and then flattening the tube. If a gussetted bag is desired, a gusset will be formed in the tube during the flattening process. The flattened tube is then provided with heat seals and slits or lines of perforation across its width at intervals along its length to provide detached plastic bags or a length of detachable plastic bags respectively. The present invention provides a modification of this process which will enable easy and cheap fabrication of water-soluble or water-dispersible plastic bags.

In accordance with the present invention there is provided a method for producing a tube of plastics material for use in the production of plastic bags comprising extruding a tube of plastics material, inflating the tube to increase its diameter and reduce its wall thickness and then flattening the tube and optionally inserting a gusset characterised by coextruding water-insoluble plastics material and water-soluble or water-dispersible plastics material to form an integral tube with water-soluble or water-dispersible plastics material forming the length of the tube for part of its circumference and water-insoluble plastics material forming the length of the tube for the remainder.

It can be seen that by employing this method a tube of plastics material is produced which can be used in conventional methods for producing plastic bags.

The invention also includes a method for producing plastic bags comprising extruding a tube of plastics material, inflating the tube to increase its diameter and reduce its wall thickness, flattening the tube and optionally inserting a gusset and then providing heat seals and slits or lines of perforation across the width of the flattened tube at intervals along its length to provide detached plastic bags or a length of detachable plastic bags respectively characterised by coextruding water-insoluble plastics material and water-soluble or water-dispersible plastics material to form an integral tube with water-soluble or water-dispersible plastics material forming the length of the tube for part of its circumference and water-insoluble plastics material forming the length of the tube for the remainder.

Plastic bags produced by such methods are often arranged so that they form a length of detachable bags connected one to another by lines of perforation.

Herein, the dimensions of a particular, generally rectangular, plastic bag are referred to as follows. The distance from what is to be the open end of a plastic bag to the side opposing that is called the "length" while the distance between the remaining two opposing sides is called the "width".

Lengths of detachable plastic bags can be produced according to the method of the present invention so that they are connected either so that the lengths of the bags stretch along the length of plastics material or so that their widths stretch along the length of the plastics material depending on the arrangement of the heat seals and lines of perforation provided across the width of the flattened tube.

Thus in a preferred embodiment the method includes the feature of providing across the width of the flattened tube alternate heat seals and lines of perforation at intervals along the length of the tube, each heat seal having one close neighbouring line of perforation and the other neighbouring line of perforation spaced from it to provide a length of detachable plastic bags having their lengths aligned along the length of plastics material and having one or more integral strips of water-soluble or water-dispersible plastics material along their lengths.

In a further embodiment detachably joined plastic bags are provided with their widths aligned along the length of plastics material. In this case the method includes the features of sliting the flattened tube along the length of one fold and providing across its width at spaced intervals groups consisting of a line of perforation flanked by two heat seals to provide a length of detachable plastic bags having their widths aligned along the length of plastics material and having one or more integral strips of water-soluble or water-dispersible plastics material along their widths. This embodiment does involve one additional process step in that the flattened tube must be slit in order to provide the open end of the plastic bag but this can easily be done by passing the flattened tube against a knife blade.

In order to provide strong plastic bags it is necessary that the two different sorts of plastics material should bond well to each other and produce an integral tube of plastics material from which the plastic bags can be formed. In this respect, the water-insoluble plastics material and the water-soluble or water-dispersible plastics material will be chosen so that they can bond well to each other when melt extruded.

Preferably polyethylene, most preferably low density polyethylene, will be used as the water-insoluble plastics material. Although in general any thermoplastic material which forms films and can be extruded and heat sealed can be used.

A suitable water-soluble plastics material which may be used in the present invention is a water-soluble polyvinyl alcohol thermoplastic composition. While polyvinyl alcohol which dissolves or disperses in water of room temperature may be employed it is preferred to use polyvinyl alcohol which only dissolves or disperses at higher temperatures, preferably above 35° C, more preferably above 40° C. In this way the possible problem of a bag starting to decompose if filled with very damp laundry is avoided. The bag will not decompose until it is in contact with water of higher temperature, for example, water heated during washing.

One method of promoting good bonding between the plastics materials during extrusion is to arrange that the materials are extruded in tubular form through a die with the water-soluble or water-dispersible plastics material and the water-insoluble plastics material forming adjacent sections of the stream. Thus, preferably the plastics materials are coextruded by inserting at least one stream of water-soluble or water-dispersible plastics material between adjacent streams of water-insoluble plastics material to form a generally tubular extrusion stream and thereby produce at least one strip of water-soluble or water-dispersible plastics material along the length of the tube. Where it is desired that a plurality of strips are formed along the length of the tube, each of a plurality of streams of water-soluble or water-dispersible plastics material will be inserted between a different pair of adjacent streams of water-insoluble plastics material. This may be done by feeding separate streams of water-soluble or water-dispersible plastics material from a plurality of separate reservoirs of that material or by providing a single stream which is split into a plurality of streams shortly prior to being inserted into the tubular extrusion stream.

One convenient method for inserting one or more streams of water-soluble or water-dispersible plastics material between adjacent streams of water-insoluble plastics material involves the use of two concentric annular dies blocked in complementary regions one of which supplies water-soluble or water-dispersible plastics material and the other water-insoluble plastics material. If one die is blocked for part of its circumference while the other die is blocked except for the corresponding part of its own circumference the desired regions of different plastics material will be co-extruded adjacent each other. A single annular die, the annular width of which decreases along its length, is placed over the two partially blocked dies to funnel the regions of different plastics material together and yield single extrudate of circular cross-section formed of water-soluble or water-dispersible material for part of its circumference and water-insoluble dispersible material for the remainder.

The present invention also includes a generally rectangular bag which may be gussetted, for example a laundry bag, of plastics material which comprises integrally formed regions of water-insoluble plastics material and water-soluble or water-dispersible plastics material. It will be appreciated that such a bag can be formed by a method such as that described above.

In one preferred embodiment the bag will have one or more integral strips of water-soluble or water-dispersible plastics material along the whole of its length. More preferably it will comprise two integral strips of water-insoluble or water-dispersible plastics material along the whole of its length, one along each fold line. When such a bag is subjected to water the two strips will disintegrate leaving only a central band of water-insoluble plastics material. No pockets will remain in which soiled articles might be trapped.

In another embodiment the bag will comprise one or more integral strips of water-soluble or water-dispersible plastics material across the whole of its width, preferably it will comprise two integral strips across the whole of its width the two strips being positioned one above the other and spaced from both longitudinal ends of the bag. In this way the strips form a band of water-soluble or water-dispersible plastics material around the middle of the bag so that when the bag is subjected to water it will disintegrate into two halves thus permitting soiled articles to be released.

The invention further provides a method for washing contaminated articles of woven or non-woven textile characterised by (a) enclosing the articles in a bag as claimed in any one of claims 9 to 17 and then closing the previously open end, and (b) subjecting the bag to the normal washing cycle of a washing machine whereby the contaminated articles are released from the bag and washed on dissolution or dispersion of the water-soluble or water-dispersible plastics material.

The invention will now be further described with reference to the accompanying drawing in which:

Figure 1 is part of a length of plastic bags according to a first embodiment of the invention, and

Figure 2 is part of a length of plastic bags according to a second embodiment of the invention.

Figure 3 is a cross-section through two concentric annular dies for use in producing bags and tubes according to the invention.

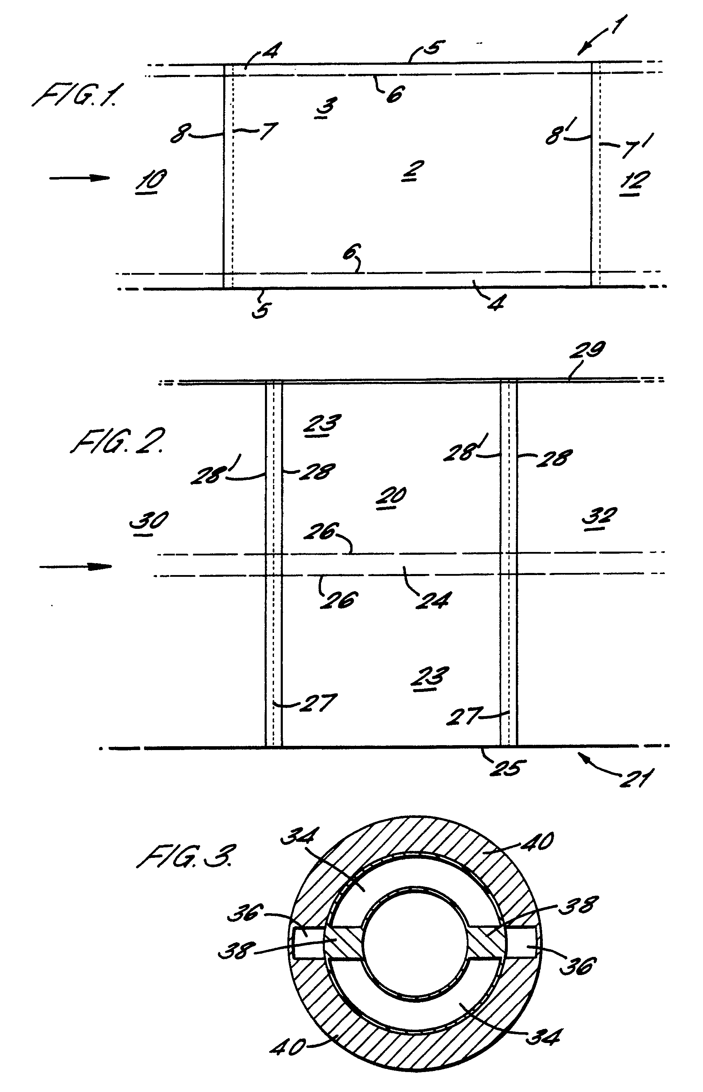

Referring to the drawings, a tube of plastics material having water-soluble or water-dispersible plastics material forming the length of the tube for part of its circumference and water-insoluble material forming the length of the tube for the remainder is formed by co-extrusion through two concentric annular dies 34 and 36 shown in Figure 3. Two opposing parts 38 of the annular cross-section of the inner die 34 are blocked to prevent plastics material being extruded in those regions. The annular cross-section of the outer die 36 is mostly blocked 40 but two clear channels for extrusion of plastics material remain adjacent the blocked parts 38 of the inner die 34. Water-insoluble plastics material is extruded through the inner die 34 while at the same time water-soluble or water-dispersible plastics material is extruded through the channels of die 36. On leaving these dies all of the plastics material is funnelled through a single annular die (not shown). The annular width of this funnelling die decreases along its length, being as wide as the combination of the two concentric dies 34 and 36 at the end adjacent them and narrowing to about half that width at the extruding end. In this way the two streams of plastics material extruded from the concentric dies 34 and 36 are forced together to form a single generally tubular co-extruded stream. This extruded tube is then inflated to increase its diameter and reduce its wall thickness and then flattened in accordance with conventional procedures. Heat seals and slits or lines of perforations are then formed across the flattened width to produce a series of detached plastic bags or a length of detachable plastic bags.

Figure 1 shows a plastic bag 2 which is part of a length of detachably joined plastic bags indicated generally by 1. The length of bags 1 is formed from a flattened tube of plastics material produced as described above. The body 3 of the plastic bag 2 is formed from water-insoluble plastics material, namely low density polyethylene supplied by BP as grade LD 5310. Two strips 4 of water-soluble polyvinyl alcohol plastics material, namely Moviol 20-98, are present, one along the length of each of the folds 5 of the bag. These strips result from extrusion of water-soluble plastics material through the two unblocked channels of outer die 36. The polyethylene and polyvinyl alcohol are integrally joined to form the plastics material of the bag but the boundary of these two materials is for reference shown by dotted lines 6.

The bag 2 is separated from its neighbouring bags 10 and 12 by lines of perforation 7 and 7′ Heat seal 8′ formed across the width of the plastics material forms one closed end of the bag 2 while a further heat seal 8 provides the closed end for the neighbouring bag on the left hand side.

When the bag is desired to be used it is detached from the neighbouring bags by tearing along lines of perforations 7 and 7'. In this way the three closed sides of the bag are provided by the two folds 5 and the heat seal 8' while the opening is provided along the line of perforation 7.

Soiled articles can be inserted into the bag 2 and its open end can then be closed, for example by gathering it together and applying a fastening around the gathered end, such as string, possibly water-soluble string, or a plastic tying device. Alternatively, the open end of the bag may be left flat and closed by passing it through a heat sealing device.

On contact with water the strips 4 of water-soluble polyvinyl alcohol will dissolve leaving only a band of water-insoluble plastics material and releasing the soiled articles are released to be washed.

Figure 2 shows a plastic bag 20 according to another embodiment of the invention which is part of a length of detachably joined plastic bags indicated generally by 21. This is similarly formed from a flattened tube of LD 5310 polyethylene and Moviol 20-98 polyvinyl alcohol formed as described above. However, in this case the two strips of polyvinyl alcohol 24 are arranged one above the other. The remainder of the plastic bag is formed from polyethylene 23 the boundary of the polyvinyl alcohol and polyethylene is shown for convenience by dotted lines 26.

To produce such a length of detachable joined bags 21 the flattened tube of plastics material is slit along edge 29 to leave an opening. Subsequently, pairs of heat seals 28 and 28' are formed across the width of the plastics material and lines of perforation 27 are formed between each pair of heat seals 28 and 28'.

Bag 20 can be separated from neighbouring bags 30 and 32 of the length of detachably joined bags 21 by tearing along the lines of perforation 27. The detached bag 20 then has three closed sides formed by the two opposing heat seals 28 and 28' and by fold line 25. The open end of the bag is provided by the slit edge 29.

This bag may be employed for washing clothes in the same manner as the bag described above in relation to Figure 1. However, on contact with water the structure of this bag after disintegration will differ from that of the other bag in that it will divide into two smaller bags with open ends.

**Claims**

1. A method for producing a tube of plastics material for use in the production of plastic bags comprising extruding a tube of plastics material, inflating the tube to increase its diameter and reduce its wall thickness and then flattening the tube characterised by coextruding water-insoluble plastics material and water-soluble or water-dispersible plastics material to form an integral tube with water-soluble or water-dispersible plastics material forming the length of the tube for part of its circumference and water-insoluble plastics material forming the length of the tube for the remainder.

2. A method for producing plastic bags comprising extruding a tube of plastics material, inflating the tube to increase its diameter and reduce its wall thickness, flattening the tube and then providing heat seals and slits or lines of perforation across the width of the flattened tube at intervals along its length to provide detached plastic bags or a length of detachable plastic bags respectively characterised by coextruding water-insoluble plastics material and water-soluble or water-dispersible plastics material to form an integral tube with water-soluble or water-dispersible plastics material forming the length of the tube for part of its circumference and water-insoluble plastics material forming the length of the tube for the remainder.

3. A method as claimed in claim 2 characterised by providing across the width of the flattened tube alternate heat seals and lines of perforation at intervals along the length of the tube, each heat seal having one close neighbouring line of perforation and the other neighbouring line of perforation spaced from it to provide a length of detachable plastic bags having their lengths aligned along the length of plastics material and having one or more integral strips of water-soluble or water-dispersible plastics material along their lengths.

4. A method as claimed in claim 2 characterised by parting the flattened tube along the length of one fold and providing across its width at spaced intervals groups consisting of a line of perforation flanked by two heat seals to provide a line of detachable plastic bags having their widths aligned along the length of plastics material and having one or more integral strips of water-soluble or water-dispersible plastics material along their widths.

5. A method as claimed in any one of claims 1 to 4 characterised in that the plastics materials are coextruded by inserting at least one stream of water-soluble or water-dispersible plastics material between adjacent streams of water-insoluble plastics material to form a generally tubular extrusion stream and thereby produce at least one strip of water-soluble or water-dispersible plastics material along the length of the tube.

6. A method as claimed in claim 5 in which the at least one stream of water-soluble or water-dispersible plastics material is inserted between adjacent streams of water-insoluble plastics material by co-extrusion through two concentric annular dies which are blocked in complementary regions.

7. A method as claimed in any one of claims 1 to 6 characterised in that it includes the step of forming a gusset in the tube.

8. A method as claimed in any one of claims 1 to 7 in which the water-insoluble plastics material comprises polyethylene.

9. A method as claimed in any one of claims 1 to 8 in which the water-soluble or water-dispersible material comprises polyvinyl alcohol.

10. A method as claimed in any one of claims 1 to 9 in which the water-soluble or water-dispersible material is only soluble or dispersible in water at 35°C or above.

11. A generally rectangular or gussetted bag of plastics material which comprises integrally formed regions of water-insoluble plastics material and water-soluble or water-dispersible plastics material.

12. A plastic bag as claimed in claim 11 having one or more integral strips of water-soluble plastics material along the whole of its length.

13. A plastic bag as claimed in claim 12 comprising two integral strips of water-soluble or water-dispersible plastics material along the whole of its length, one along each fold line.

14. A plastic bag as claimed in claim 11 having one or more integral strips of water-soluble or water-dispersible plastics material across the whole of its width.

15. A plastic bag as claimed in claim 14 comprising two integral strips of water-soluble or water-dispersible plastics material across the whole of its width the two strips being positioned one above the other and spaced from both longitudinal ends of the bag.

16. A plastic bag as claimed in any one of claims 11 to 15 in which the water-soluble or water-dispersible plastics material comprises polyvinyl alcohol.

17. A plastic bag as claimed in any one of claims 11 to 16 in which the water-insoluble plastics material comprises polyethylene.

18. A method for washing contaminated articles of woven or non-woven textile characterised by (a) enclosing the articles in a bag as claimed in any one of claims 11 to 17 and then closing the previously open end, and (b) subjecting the bag to the normal washing cycle of a washing machine whereby the contaminated articles are released from the bag and washed on dissolution or dispersion of the water-soluble or water-dispersible plastics material.

FIG.1.

FIG.2.

FIG.3.